# EUROPEAN PATENT SPECIFICATION

(11) **EP 1 242 152 B1**
(45) Date of publication and mention of the grant of the patent: **24.09.2003**
(21) Application number: 00985652.7
(22) Date of filing: 20.12.2000
(51) Int. Cl.: A63F 13/00

(54) **INTERACTIVE DESIGN AND AMUSEMENT SYSTEM**
INTERAKTIVES ENTWURF- UND UNTERHALTUNGSSYSTEM
SYSTEME INTERACTIF LUDIQUE ET DE CONCEPTION

(30) Priority: 20.12.1999 GB 9929894
(43) Date of publication of application: 25.09.2002
(73) Proprietor: CENTRAL RESEARCH LABORATORIES LIMITED, Hayes, Middlesex, UB3 1HH (GB)
(72) Inventor: VERNALL, Christopher, John, London NW5 2HG (GB)
(74) Representative: Sharp, Alan Cooper
(86) International application number: GB0004912
(87) International publication number: WO01045813

(56) References cited:
- RU-C- 2 107 328
- US-A- 3 792 243
- US-A- 4 988 981

## Description

### Technical Field

This invention relates to an interactive design and amusement system.

### Background Art

Designers and architects use models to realise their designs in three dimensions. The construction of these models is time consuming, even when the models are simple blocks intended only to conceptualise a design.

The present invention arose in an attempt to overcome the aforementioned problem. Another aim of the present invention is to provide an amusement system.

RU-C-2 107 328 discloses an example of tracking and imaging of 3-dimensional positions of sensors.

### Disclosure of Invention

According to the present invention there is provided an interactive design and amusement system as claimed in claims 1 to 10.

### Brief Description of Drawings

The invention will now be described, by way of example only, with reference to the accompanying Figures, in which:
Figure 1 illustrates an overall block diagram of the system, showing components, transmitter, receiver and display;
Figures 2a and 2b show diagrammatical sections through a component; and
Figure 3 is a flow diagram illustrating the method of operation of an embodiment of the invention which incorporates a look-up table.

### Detailed Description of Preferred Embodiments

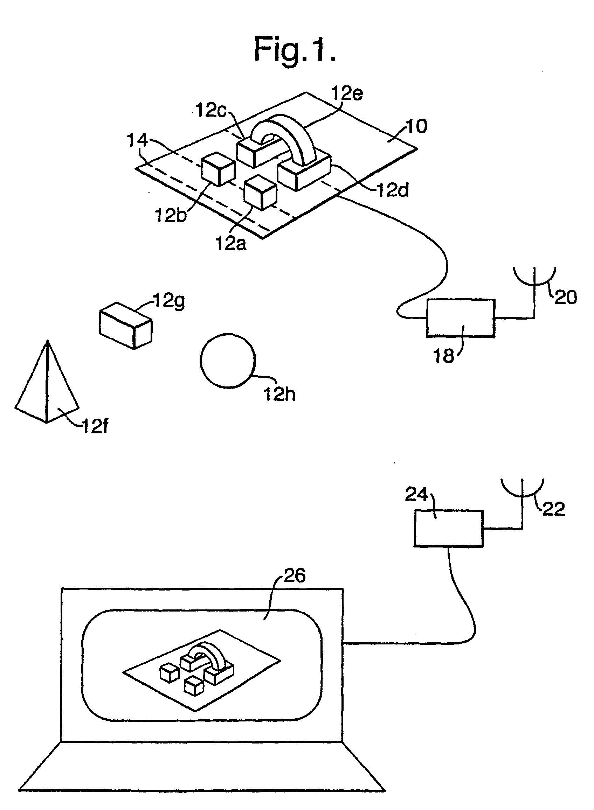

There is shown diagrammatically in Figure 1 a baseboard (10) with components (12a), (12b), (12c), (12d) and (12e) mounted thereon. A series of electrical connectors (14) through which electrical current is delivered are formed integrally with the baseboard (10), and are adapted to contact portions (16) (not shown) of each component. Other components (12f), (12g) and (12h) are also depicted, however these are not connected to the baseboard (10).

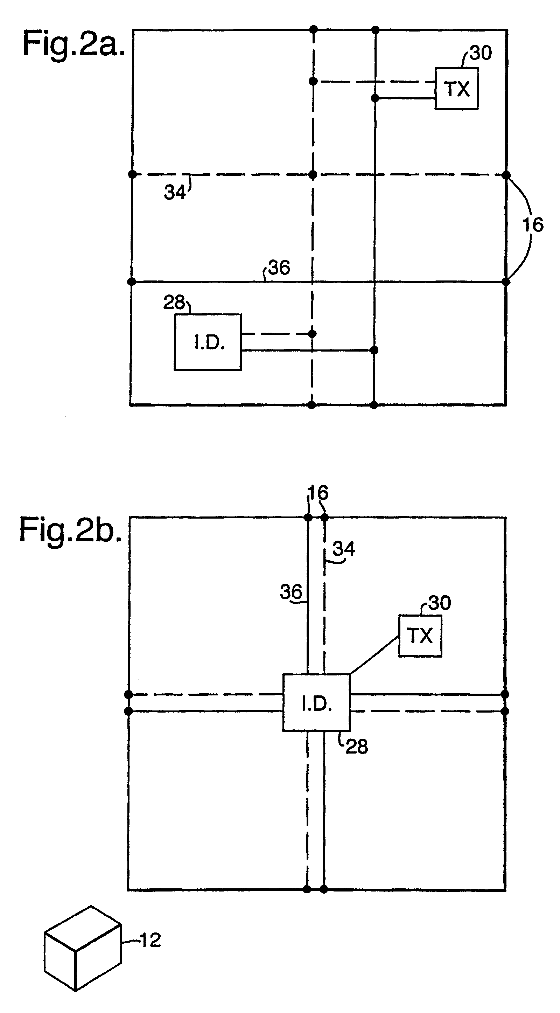

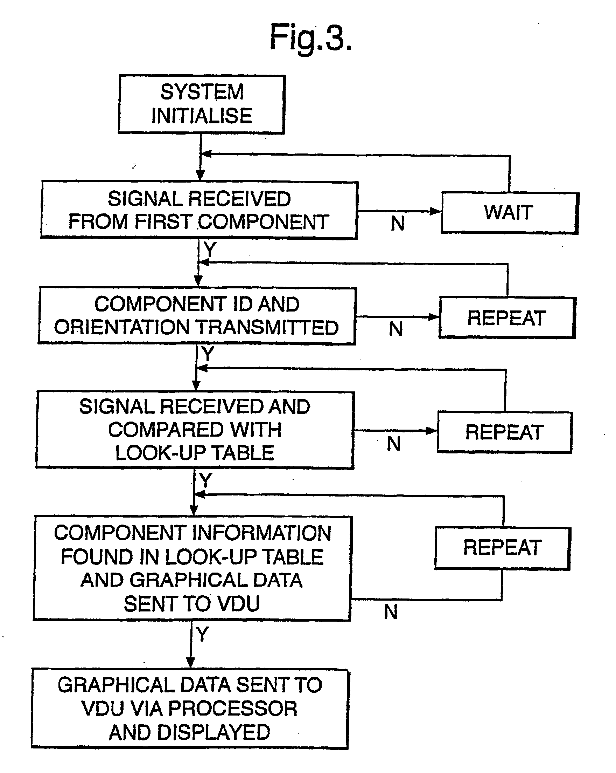

Electrical connectors (14) are in electrical communication with a microprocessor (18). A radio frequency (RF) antenna (20) is connected to the microprocessor (18). The antenna (20) transmits signals to a similar antenna (22) and a controller (24). Controller (24) may also have a microprocessor, and is adapted to supply a signal to a monitor or visual display unit (VDU) 26, which signal is representative of each of the components (12a) to (12e) and their relative orientation one to another. The process by which this is achieved is described below, with reference to Figures 2 and 3.

Figure 2a shows a circuit and elements on a component (12). Figure 2b shows the same component (12) having a different layout of the circuit and elements, but operating in the same way as the component of Figure 2a. In the embodiments shown, the component (12) is in the form of a cube and the diagrams are underplan views. Electrical contact portions (16) for contacting other components are provided around the peripheral regions of component (12).

The component (12) also has electrical interconnections (34,36) formed thereon which terminate at electrical contact portions (16). Electrical interconnections (34) are shown as broken lines. Electrical interconnections (36) are shown as solid lines. The electrical contacts (16) and electrical interconnections (34,36) are used to relay energy to the next component. Interconnections (34) may be used to transmit energy, and interconnections (36) may be used to receive energy (or vice versa). Alternatively, interconnections may be formed that allow both the transmission and receiving of energy. Orientation and identification data are also transmitted via the connectors (16) and interconnections (34,36). This may be carried out, for example, using pulsed signals.

Component (12) also contains an identifier (28) and a transmitter (30), which are both connected to electrical interconnections (34) and (36), and in communication with one another. The component may also contain a separate orientation means (not shown).

The identifier (28) is capable of broadcasting and receiving signals. The identifier (28) may alternately receive and broadcast signals. The identifier broadcasts a signal which is indicative of the identity or type of component (12). This signal may be broadcast at intervals, for example every second or few seconds, or it may be broadcast on request, for example when another component (not shown) is placed adjacent it. As each new component (12) modifies the electrical characteristics of the circuit, this information may be used to determine the relative orientation of a component with respect to its neighbour. The identification means (28) may take the form of an RF transmitter connected to an integrated circuit (IC), ASIC or VLSI. A suitable amount of energy to power the components (12) may be obtained via an inductive coupling or via a capacitive loop.

The transmitter (30) is adapted to transmit an initial location and orientation signal via the microprocessor (18) to antenna (20). The transmitter (30) can be a short range radio frequency (RF) transmitter, ideally of the type which is licence exempt. Transmitter (20) then transmits this signal to receiver (22) and the signal is processed so that suitable data for producing an image is presented to computer (26).

Because data volumes are extremely slow, once a component (12) has transmitted data concerning its location and relative orientation, the component may be 'switched off'. This is because as soon as the data receiver (22) has been provided with the data and an image produced therefrom, the data becomes redundant; unless a component (12) is removed or its position varied. The electrical connections or pathways (14,34,36) thereafter serve only to deliver energy to or from a subsequent component and to act as a conductor for identification and orientation data to the transmitter (30).

The orientation means in each component (12) can take the form of a magnetic sensor, an RF identification device or electronic components having particular characteristics. For example, a combination of electronic components, such as: resistor and/or capacitor and/or inductor arranged to provide a particular impedance to a particular input frequency. In this latter arrangement the electronic components may also act to identify the particular component (12).

Data about each of the components (12) can be stored in an electronic look-up table, as described with reference to Figure 3. This data can either be stored at the transmitting part of the system i.e., in the microprocessor (18), or at the receiving part i.e., in the electronics associated with the antenna (receiver) (22). The following description refers to a system wherein the data is stored in the microprocessor (18). In operation of the system, a signal is received from the first component (12). The i.d. of the component (12) and its orientation is then transmitted to the microprocessor (18) by the transmitter (30). The signal is received at the microprocessor (18) and is compared with the data stored in the look-up table. Information found in the look-up table for that particular component and graphical data is sent to the display (26). The data is then displayed.

The system described herein may be used, for example, to model an airport with components (12) used as aircraft, buildings and/or vehicles. Such an embodiment may be used to model aircraft taking off, landing or taxiing. Manipulation of the image of the airport is preferably achieved by way of control software. For example, the colours, sizes and shapes of components (12) shown on the display (26) may be altered by simply reconfiguring control software. This feature greatly facilitates changing model of a building or prototype. For example dimensions may be amended using software and a computer. This feature of the system is felt to be of particular value to designers and architects. Similarly a displayed design may be manipulated on a screen, such as enlarged or rotated in two dimensions.

The invention has been described by way of a number of embodiments, and variation may be made to them without departing from the scope of the invention. For example, the system may be configured as an amusement device or educational toy. There may be provided a data receiver and control software for generating a signal for transmission to a remote display, for example by way of an RF connection, 'internet' link or via a satellite transceiver.

## Claims

1. An interactive design and amusement system comprising: a plurality of components (12), a data transmitter (20), a data receiver (22) and a display device (26); the components (12) being adapted so that they may be arranged relative to one another on a baseboard (10) having electrical connections (14) formed thereon; each component having electrical connections (34,36), identification means (28), orientation means and data transmission means (30) whereby, in use, the data transmission means transmits data indicative of the identity of each component (12) and its orientation, relative to another component, to a receiver, and means for processing the data (18,24) received so that, in use, signals are generated for transmission to the display device (26), whereat, in use, images are displayed, said images corresponding to the components (12).

2. An interactive design and amusement system according to claim 1 wherein the orientation means includes a magnetic sensor.

3. An interactive design and amusement system according to claim 1 wherein the orientation means includes a radio frequency device.

4. An interactive design and amusement system according to claim 1 wherein the orientation means includes at least one electronic component.

5. An interactive design and amusement system according to any of claims 1 to 4 wherein the identification means (28) includes a radio frequency transmitter.

6. An interactive design and amusement system according to claim 5 wherein the identification means (28) further includes an integrated circuit.

7. An interactive design and amusement system according to claim 5 wherein the identification means (28) further includes an ASIC.

8. An interactive design and amusement system according to claim 5 wherein the identification means (28) further includes a VLSI.

9. An interactive design and amusement system according to any of claims 1 to 5 wherein the identification means (28) includes an inductor.

## Patentansprüche

1. Interaktives Entwurf- und Unterhaltungssystem umfassend: eine Mehrzahl von Komponenten (12), eine Datenübertragungseinrichtung (20), eine Datenempfangseinrichtung (22) und eine Anzeigevorrichtung (26), wobei die Komponenten (12) derart angepasst sind, dass sie relativ zueinander auf einer Grundplatte (10) mit darauf befindlichen elektrischen Anschlüssen (14) angeordnet werden können, wobei jede Komponente elektrische Anschlüsse (34, 36), Identifikationsmittel (28), Orientierungsmittel und Datenübertragungsmittel (30) besitzt, wobei im Betrieb die Datenübertragungsmittel Datenkennzeichen der Identität jeder Komponente (12) und ihrer Orientierung relativ zu einer anderen Komponente an einen Empfänger übertragen, und Mittel zum Verarbeiten der empfangenen Daten (18, 24), so dass im Betrieb Signale zur Übertragung zu der Anzeigevorrichtung (26) erzeugt werden, auf der im Betrieb Bilder angezeigt werden, wobei diese Bilder den Komponenten (12) entsprechen.

2. Interaktives Entwurf- und Unterhaltungssystem nach Anspruch 1, wobei die Orientierungsmittel einen magnetischen Sensor enthalten.

3. Interaktives Entwurf- und Unterhaltungssystem nach Anspruch 1, wobei die Orientgierungsmittel eine Hochfrequenz-Vorrichtung enthalten.

4. Interaktives Entwurf- und Unterhaltungssystem nach Anspruch 1, wobei die Orientierungsmittel zumindest eine elektronische Komponente enthalten.

5. Interaktives Entwurf- und Unterhaltungssystem nach einem der Ansprüche 1 bis 4, wobei die Identifikationsmittel (28) ein Hochfrequenz-Übertragungsgerät enthalten.

6. Interaktives Entwurf- und Unterhaltungssystem nach Anspruch 5, wobei die Identifikationsmittel (28) zusätzlich eine integrierte Schaltung enthalten.

7. Interaktives Entwurf- und Unterhaltungssystem nach Anspruch 5, wobei die Identifikationsmittel (28) zusätzlich einen ASIC enthalten.

8. Interaktives Entwurf- und Unterhaltungssystem nach Anspruch 5, wobei die Identifikationsmittel (28) zusätzlich einen VLSI-Chip enthalten.

9. Interaktives Entwurf- und Unterhaltungssystem nach einem der Ansprüche 1 bis 5, wobei die Identifikationsmittel (28) einen Induktor enthalten.

## Revendications

1. Système interactif ludique et de conception comprenant : plusieurs composants (12), un émetteur de données (20), un récepteur de données (22) et un dispositif d'affichage (26) ; les composants (12) étant adaptés de sorte qu'ils peuvent être agencés les uns par rapport aux autres sur un plateau support (10) ayant des raccordements électriques (14) formés sur celui-ci ; chaque composant ayant des raccordements électriques (34, 36) des moyens d'identification (28), des moyens d'orientation et des moyens de transmission de données (30), moyennant quoi, à l'usage, les moyens de transmission de données transmettent des données indicatives de l'identité de chaque composant (12) et de son orientation, par rapport à un autre composant, à un récepteur, et des moyens pour traiter les données (18, 24) reçues de sorte qu'à l'usage, des signaux sont générés pour la transmission sur le dispositif d'affichage (26), sur lequel à l'usage, des images sont affichées, lesdites images correspondant aux composants (12).

2. Système interactif ludique et de conception selon la revendication 1, dans lequel les moyens d'orientation comprennent un capteur magnétique.

3. Système interactif ludique et de conception selon la revendication 1 dans lequel les moyens d'orientation comprennent un dispositif à fréquence radio.

4. Système interactif ludique et de conception selon la revendication 1, dans lequel les moyens d'orientation comprennent au moins un composant électronique.

5. Système interactif ludique et de conception selon l'une quelconque des revendications 1 à 4 dans lequel les moyens d'identification (28) comprennent un émetteur à fréquence radio.

6. système interactif ludique et de conception selon la revendication 5 dans lequel les moyens d'identification (28) comprennent en outre un circuit intégré.

7. Système interactif ludique et de conception selon la revendication 5, dans lequel les moyens d'identification (28) comprennent en outre un circuit intégré à application spécifique.

8. Système interactif ludique et de conception selon la revendication 5, dans lequel les moyens d'identification (28) comprennent en outre une intégration à très grande échelle.

9. Système interactif ludique et de conception selon l'une quelconque des revendications 1 à 5 dans lequel les moyens d'identification (28) comprennent une bobine d'induction.
